Europäisches Patentamt

European Patent Office

Office européen des brevets

(11) Veröffentlichungsnummer: **0 126 782**
**B1**

(12) **EUROPÄISCHE PATENTSCHRIFT**

(45) Veröffentlichungstag der Patentschrift:
16.09.87

(51) Int. Cl.⁴: **H 04 N 1/40, H 04 N 1/23**

(21) Anmeldenummer: **83104301.3**

(22) Anmeldetag: **02.05.83**

(54) Verfahren für die Bildwiedergabe mit Grauwerten.

(43) Veröffentlichungstag der Anmeldung:
05.12.84 Patentblatt 84/49

(45) Bekanntmachung des Hinweises auf die Patenterteilung:
16.09.87 Patentblatt 87/38

(84) Benannte Vertragsstaaten:
AT CH DE FR GB LI NL

(56) Entgegenhaltungen:
DE - A - 1 597 773
FR - A - 2 253 338

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk,
N.Y. 10504 (US)**

(84) Benannte Vertragsstaaten: **CH FR GB LI NL AT**

(72) Erfinder: **Volker, Rudolph, Dr., Finkenweg 20,
D-7031 Aidlingen 3 (DE)**
Erfinder: **Werner, Ruppert, Dipl.-Ing., Gartenstrasse 9,
D-7036 Schönaich (DE)**
Erfinder: **Goldrian, Gottfried, Dipl.-Ing., Gutachter
Weg 18, D-7030 Böblingen (DE)**
Erfinder: **Wohnsdorf, Manfred, Genkerstrasse 9,
D-7030 Böblingen (DE)**

(74) Vertreter: **Böhmer, Hans Erich, Dipl.-Ing., Schönaicher
Strasse 220, D-7030 Böblingen (DE)**

## Beschreibung

Die Erfindung betrifft ein Verfahren für die Wiedergabe von bildlichen Darstellungen mit Grauwerten unter Verwendung von Bildelementen (PELS) für unterschiedliche Grauwerte, die durch Punktmuster mit unterschiedlicher Verteilung und Anordnung der einzelnen Punkte dargestellt werden. Für die Wiedergabe von Grauwerten sind bereits viele verschiedene Verfahren bekannt, wobei man mit mehr oder weniger Erfolg versucht hat, die kontinuierlich sich ändernden Grautöne eines natürlichen Bildes zu simulieren.

Dabei gibt es verschiedene Qualitätskriterien die anzustreben sind, nämlich eine möglichst hohe Auflösung, in der die Grautöne, vor allem die hellen Grautöne gut wiedergegeben werden, wobei die spatialen Frequenzen d.h. die seitliche Punktauflösung berücksichtigt wird und bei der schliesslich eine hohe Gleichförmigkeit und Wiedergabetreue erzielbar ist.

Besonders in Gebieten mit konstanten oder langsam sich änderndem Grauton ist die hohe Auflösung und Gleichmässigkeit von grosser Bedeutung. Ideal für das menschliche Auge als auch für eine optische Abtastung ist die Photographie und zwar aus folgenden Gründen:

Die Rasterung ist dabei in zweifacher Hinsicht stochastisch, d.h. in der Fläche der einzelnen Körner, d.h. der Bildpunkte und auch in deren Verteilung in der Fläche. Die bekannte Kornstruktur von Photographien hat dabei den Vorteil, dass durch die völlig ungleichförmige Grösse und ebenso ungleichförmige Verteilung des Korns ein Moiré-Muster vermieden wird, wenn das Bild wieder mit einer bestimmten spatialen Auflösung abgetastet oder gedruckt werden soll. Derartige Moiré-Muster entstehen durch Überlagerung der Rasterfrequenzen und der Abtastfrequenzen eines Abtasters oder aber auch der Eigenfrequenzen eines Druckers oder eines Bildschirms. Wenn man beispielsweise ein gerastertes Halbtonbild, wie beim Zeitungsdruck abtastet, entsteht eine Streifenbildung.

Dies sind also die erheblichen Nachteile aller Systeme, die mit konstanter Bildpunktadressierung arbeiten, wie bei der Lithographie oder dem Zeitungsdruck und der Simulationsverfahren wie Super-Circle, Mono-Circle und andere.

Das in diesem Zusammenhang wirkungsvollste System ist MECCA (Multiple-Error-Correction-Computation-Algorithm). Es basiert darauf, dass in einem komplexen Algorithmus das kontinuierliche Signal $Q(x, y)$, ein gewichteter Mittelwert von vorher errechneten Quantisierungsfehlern und ein Ausdruck benutzt werden, der die örtliche Bildtextur reflektiert, um damit das Drucken oder Anzeigen eines Punktes mit konstanter Grösse zu erreichen. Dies steht im Gegensatz zur Photographie oder zum Zeitungsdruck bzw. zu den diesen simulierenden Verfahren Super-Circle und Mono-Circle, wo mit variabler Bildpunktgrösse gearbeitet wird.

Wie im Einzelnen noch zu zeigen sein wird, haben beide Verfahren ihre spezifischen Nachteile, wobei insbesondere die mit fester Bildelementgrösse arbeitenden Simulationssysteme einen hohen Programmier- und Speicheraufwand erfordern.

Um den nachstehend genannten Stand der Technik FR-A-2253 368 (der deutschen Offenlegungsschrift 24 54 210 entsprechend) zu würdigen, sei zunächst auf die im Zusammenhang mit der Erfindung benutzten Definitionen verwiesen: Jeder Punkt wird von einer Elektrode gedruckt. Eine Matrix besteht z.B. aus 2×2 Zellen, von denen eine jede einem Punkt zugeordnet sein kann. Eine Matrix wird zum Druck eines abgetasteten Bildelement mit einem bestimmten Grauwert benutzt. Eine Matrixgruppe besteht aus mehreren Matrizen.

In der FR-A-2253 368 ist ein Wiedergabeverfahren von bildlichen Darstellungen mit Grauwerten beschrieben, bei welchem Bildpunkte unterschiedlicher Verteilung und Grössenanordnung innerhalb eines einen Grauwert repräsentierenden Bereiches verwendet werden. Bei diesem Verfahren treten Matrixgruppen auf, die aus einer Anzahl von Punkte enthaltenden Matrizen bestehen. Die Matrixgruppen haben unterschiedliche Grösse. Jedoch nimmt die Auflösung mit zunehmender Grösse einer Gruppe ab. In einer Matrix ist eine Vielzahl unterschiedlicher Punktestrukturen für jeden Grauwert vorgesehen. Idealerweise wird jeder abgetastete Grauwert eines Bildelementes von einer Matrix wiedergegeben. Wenn jedoch eine Matrix zur Wiedergabe eines gewünschten Grauwertes nicht geeignet ist, wird dieser Grauwert durch eine Matrixgruppe wie folgt wiedergegeben: Der durchschnittliche Grauwert von mehreren einander angrenzenden abgetasteten Bildelementen wird durch eine der Matrixgruppen wiedergegeben, welche dem gewünschten Grauwert zugeordnet ist. Der Gesichtspunkt einer optimalen Auflösung findet bei diesem Verfahren nach dem Stand der Technik noch keine Berücksichtigung.

Der Erfindung liegt die Aufgabe zugrunde, ein Verfahren zur Wiedergabe von bildlichen Darstellungen mit Grauwerten unter Verwendung von Bildpunkten anzugeben, bei dem für einen bestimmten Grauwert ein Höchstmass an Auflösung erreicht wird unter Vermeidung von die Bilddarstellung nachteilig beeinflussender gerätespezifischer und optischer Störeffekte.

Diese Aufgabe der Erfindung wird durch die im kennzeichnenden Teil des Anspruchs 1 angegebenen Massnahmen gelöst.

Weitere Ausgestaltungen der Erfindung sind den Unteransprüchen zu entnehmen.

Die Erfindung wird nunmehr anhand von Ausführungsbeispielen in Verbindung mit den beigefügten Zeichnungen im einzelnen näher erläutert.

Fig. 1a und 1b Bildelemente mit nur einem von z.B. 16 Bildpunkten

Fig. 2a, 2b und 2c Anordnungen verschiedener «Cluster» oder Bildpunktgruppen in Bildelementen

Fig. 3 eine Darstellung der Graustufen für ein Bildelement mit 16 Bildpunkten

Fig. 4 ein Bildelement mit 4 benachbarten Bildpunkten als «Cluster»

Fig. 4a die dabei erzielbare Grauskala

Fig. 5 eine andere Grauskala und

Fign. 5a und 5b ein Bildelement mit $1/4$ Bildpunkt

Fign. 6a bis 6e verschiedene Bildelemente mit je 4 Bildpunkten

Fign. 7a und 7b bezüglich ihres Grauwertes quasi äquivalente Bildelemente

Fig. 8 ein Diagramm zur Darstellung der Abhängigkeit des Grauwertes von der Art des Musters, dem Durchmesser der Cluster und dem Durchmesser der Bildpunkte, und

Fig. 9 ein Schaubild zur Verdeutlichung des gesamten Verfahrens

Es muss nun auf die verschiedenen Nachteile der bisher bekannten Verfahren eingegangen werden.

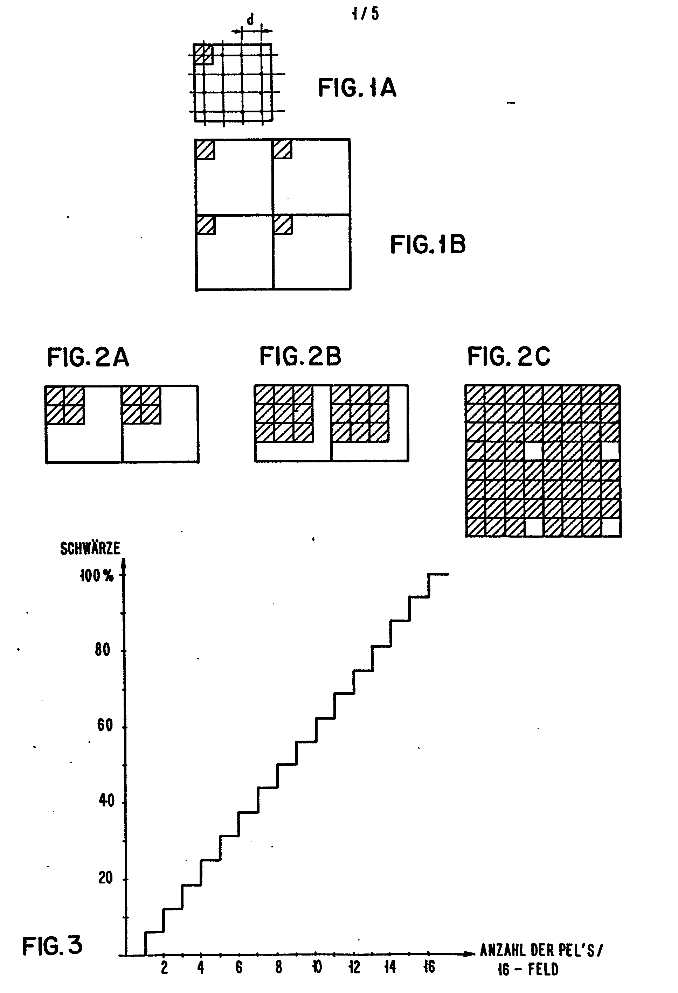

Gemäss Figuren 1a und 1b besteht eine hohe Auflösung von beispielsweise 600 Bildelementen je Zoll für ein solches Bildelement aus einer rasterartigen, vorzugsweise quadratischen Anordnung von Bildpunkten mit einem Gitterabstand von d, der beispielsweise bei 16 Einzelpunkten in der Grössenordnung von 42,3 µm liegen kann. Vorstellbar sind dabei Raster mit 9 Punkten, 16 Punkten, 49 Punkten, 64 Punkten usw. Der Einfachheit halber soll zur Erläuterung ein Raster mit 16 Bildpunkten betrachtet werden. Wenn man beispielsweise alle 16 Bildpunkte für die Wiedergabe eines Bildelementes verwendet, so erhält man Schwarz und ohne jeden Bildpunkt Weiss. Es ist sofort einleuchtend, dass man in diesem Fall 16 Graustufen von 1 aus 16 bis 15 aus 16 Bildpunkten herstellen kann. Die kleinste Schwarzfläche ist erzielbar mit $1/16$ Schwärzung = 6,2%. Wenn man für den geringsten Grauwert den einzelnen Bildpunkt immer an der gleichen Stelle des Rasters anordnet, so erhält man durch die Wiederholung Streifen- oder Moiré-Muster, die in höchstem Masse unerwünscht sind.

Verwendet man gemäss Figur 2 dann beispielsweise 4, 6, 8, 10, 12 oder 14 Bildpunkte aus unmittelbar nebeneinander und untereinander liegenden Stellen, dann erhält man sogenannte «Cluster», die dann ebenfalls wieder eine gewisse Wiederholungsfrequenz aufweisen und sich im wiedergegebenen Bild störend bemerkbar machen werden. Die dabei erzielbaren Graustufen zeigt Figur 3.

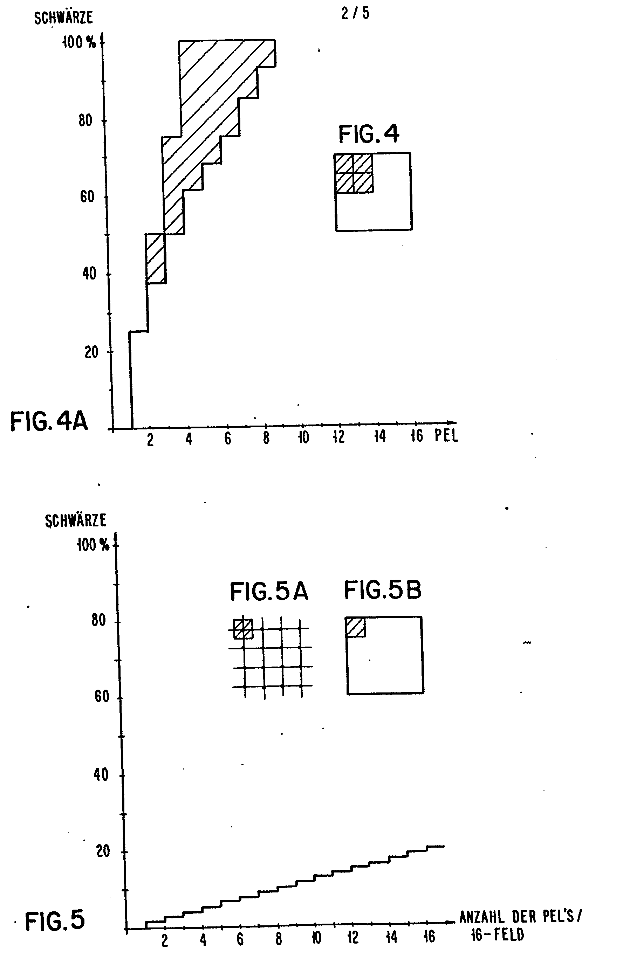

Es gibt nun verschiedene Möglichkeiten mit diesen 16 Graustufen zu arbeiten. Nimmt man beispielsweise gemäss Fign. 4 und 4a 4 Bildpunkte für ein Bildelement, dann beträgt die kleinste schwarze Fläche $1/4$ = ungefähr 25% Schwärze, d.h. man kommt mit dem niedrigsten Grauwert nicht unter 25%.

Wählt man im Gegensatz dazu gemäss Figuren 5, 5a und 5b für jedes Bildelement nur $1/4$ Bildpunkt, dann ist die kleinste Bildelementfläche $1/64$ der Schwärzung oder 1,6%. Aber die maximale Schwärze geht nur bis 25%. Man erreicht also bei 16 Graustufen zwar eine sehr schöne Wiedergabe der ganz hellen Grautöne, erreicht aber praktisch nur etwa 25% Schwärzung. Man sieht, dass beide Verfahren im wesentlichen unbrauchbar sind.

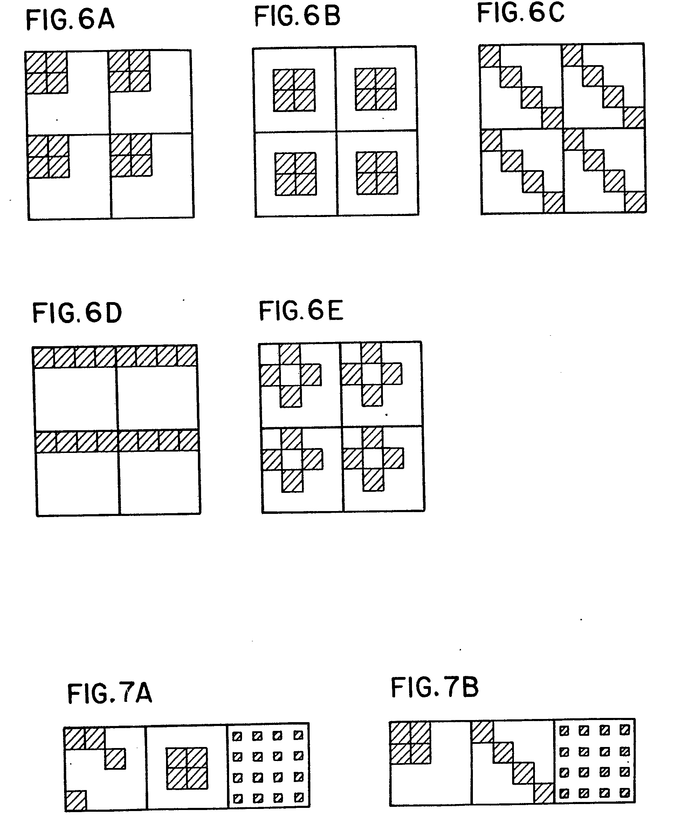

Betrachtet man also quadratische Punkte, wobei der Gitterabstand d im Raster gleich der Punktgrösse mit der Kantenlänge d sein soll, so kann man, wie gesagt, im Feld mit 16 Bildpunkten maximal 16 Graustufen erreichen. Wie Figuren 6a–6e zeigen, können an sich mehrere Anordnungen der Punkte jeweils zum gleichen quasi-äquivalenten Grauwert führen. Man kann 4 Punkte in einem Feld beispielsweise nebeneinander in Ecken oder in der Mitte oder in Diagonalen oder in Zeilen oder in Kreuzform usw. anordnen. Alle diese verschiedenen Anordnungen ergeben praktisch die gleiche Graustufe.

Trotzdem würde man aber gegenüber Störfrequenzen des Druckers, des Papiers und der Weiterverarbeitung in der Praxis zu sehr unterschiedlichen Druckergebnissen kommen. Würde z.B. durch den Drucker bedingt, die vierte Zeile stets eine grössere Schwankung in Y-Richtung zeigen, so wäre nur das Muster in Fig. 6d gegen diese Variation empfindlich. Man kann also sagen in einem 16-Feld lassen sich bei fester Punktgrösse maximal 16 nicht redundante Grauwertstufen erreichen und zwar bei folgenden Randbedingungen:

1. Ist die Bildpunktkantenlänge kleiner oder gleich dem Gitterabstand, so ergeben sich 16 Graustufen. Ist die Bildpunktkantenlänge dagegen grösser als der Gitterabstand so erhält man weniger als 16 Graustufen.

2. Der hellste Grauwert ist um so heller je kleiner die Kantenlänge des Bildpunktes ist, jedoch kann bei einer Bildpunktkantenlänge kleiner als der Gitterabstand nicht mehr die volle Schwärzung erreicht werden. D.h. aber, durch eine feste Bildpunktgrösse wird der minimale und der maximale erzielte Grauwert und die Zahl der nicht redundanten Graustufen festgelegt. Muster gleicher Graustufen können so ausgewählt werden, dass sie eine möglichst störunanfällige Druckwiedergabe liefern.

Hält man jedoch die Grösse des einzelnen Bildpunktes in einem bestimmten Bildelement mit 16 Bildpunkten fest, variiert aber von Feld zu Feld die Grösse der einzelnen Bildpunkte, so erhält man folgende Vorteile, wie sie aus dem Beispiel mit 1 Bildpunkt je Bildelement, 4 Bildpunkte je Bildelement und $1/4$ Bildpunkt je Element zu ersehen ist.

1. Der Bereich der Grauwerte lässt sich vergrössern und zwar im obengenannten Beispiel von 1,6% Schwärzung bis 100% Schwärzung.

2. Die Zahl der Grauwertstufen lässt sich nach Wahl der gewünschten Punktgrössen nahezu beliebig gross machen.

3. Die Vielfalt von geeigneten Mustern für den gleichen Grauwert wird stark erhöht.

Für das obengenannte Beispiel für eine 25%ige Schwärzung kann man gemäss den Figuren 7a und 7b entweder 4 Gitterpunkte mit je 1 Bildpunkt belegen oder 1 Gitterpunkt mit einem aus vier Bildpunkten bestehenden Cluster oder 16 Gitterpunkte mit je $1/4$-Bildpunkt. Mischt man ausserdem Muster des gleichen Grauwertes, die also als quasi-äquivalente Grauwertmuster bezeichnet werden sollen, durch einen Zufallsgenerator, so kann man das Druckergebnis oder die Wiedergabe des Bildes von zufälligen Fehlern durch den Drucker selbst oder das Papier weitgehend befreien. Weitere systembedingte Fehler werden durch die Wahl der Muster weitgehend unter Kontrolle gebracht. Durch Variation der Anzahl der Bildpunkte im Feld der Bildelemente und durch die Variation der Bildpunktgrösse von Feld zu Feld kann dann der Bereich der möglichen Grauwerte und deren Abstufungen praktisch beliebig erhöht und die Störempfindlichkeit bei höherer Auflösung reduziert werden.

Speichert man nun die für den Druck geeigneten Muster und deren Zuordnung zu Bildpunktgrössen ab, so kann ein im Drucker eingegebener Grauwert quasi analog verarbeitet und gedruckt werden.

Dies ist also der Grundgedanke der Erfindung. Durch die Variation sowohl der Anzahl der einzelnen Bildpunkte eines Bildelementes und/oder ihrer Lage und/oder ihrer Clusterbildung und/oder ihrer Grösse lässt sich eine sehr hohe Anzahl von in ihrem Grauwert zueinander äquivalenten Bildelementen darstellen. Durch die Erfindung ergeben sich folgende ganz wesentliche Vorteile.

1. Beliebig viele Grautöne je Bildelement, dadurch wesentlich höhere Auflösung als bisher bei gleicher Bildelementgrösse.

2. Da für jeden Grauton eine Vielzahl von Möglichkeiten zur Verfügung steht, lässt sich die Auswahl des jeweils für den Druck günstigsten Clusters bzw. der günstigsten Punktgrösse über einen Microcode steuern.

3. Dadurch erhält man eine gute Anpassungsmöglichkeit an die Kennlinien und die Eigenfrequenzen der weiterverarbeitenden Reproduktionsgeräte.

4. Man spart den bisher erforderlichen sehr hohen Softwareaufwand ein.

5. Störende Papier-und Maschinenfrequenzen lassen sich dabei voll berücksichtigen.

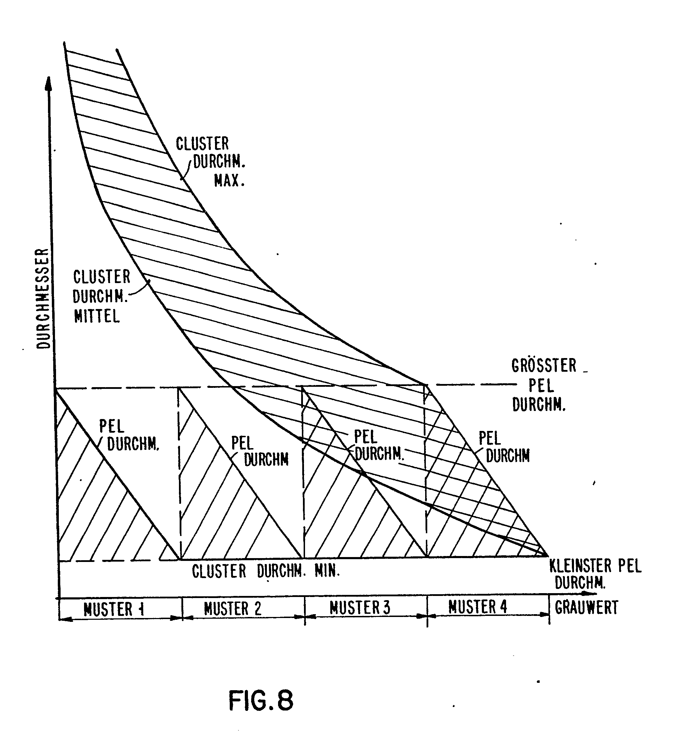

In Fig. 8 ist nun die Abhängigkeit der Grauwerte in einem Diagramm von den in Fig. 6a, c, d und e gezeigten Mustern, vom Durchmesser der einzelnen Bildpunkte zwischen kleinstem Bildpunktdurchmesser und grösstem Bildpunktdurchmesser und kleinstem Clusterdurchmesser bis zum grössten Clusterdurchmesser dargestellt. Man sieht wie dabei für die verschiedenen Muster die Grauwerte von den Bildpunktdurchmessern bzw. Clusterdurchmessern abhängig sind.

Bei der Auswahl der Muster für die einzelnen Bildelemente muss man empirisch oder rechnerisch diejenigen Muster ermitteln und aussondern, die gegen alle möglichen Störungen empfindlich sind.

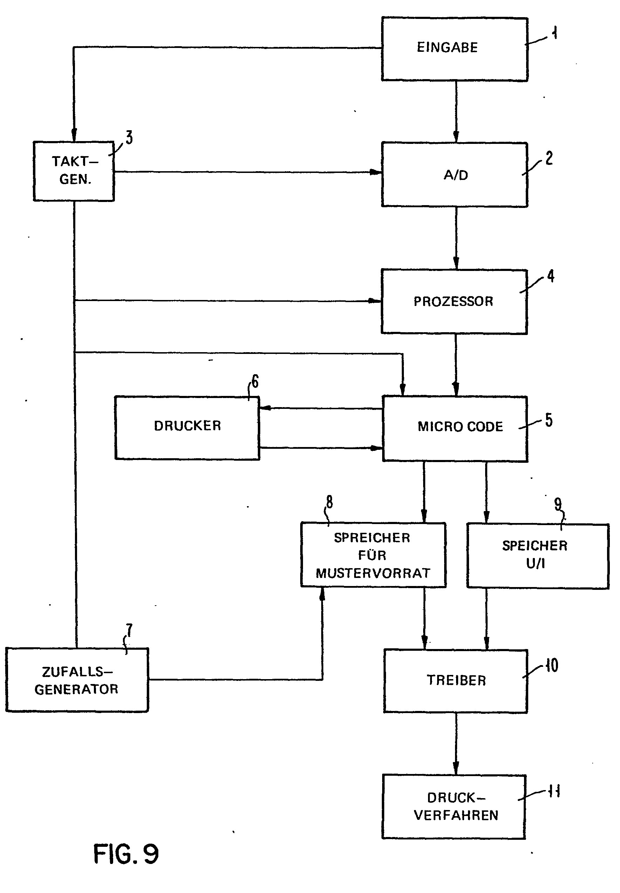

In Fig. 9 ist nun schematisch der Ablauf des neuen Druckverfahrens oder Wiedergabeverfahrens für Bildformation dargestellt. Bei der Eingabe 1 werden Analogsignale von einem Bildpunktraster von einer Videoaufnahmeröhre und dergleichen zugeführt. Selbstverständlich ist es auch denkbar, digital übertragende Daten nach Umwandlung in die entsprechenden Analogwerte an dieser Stelle zuzuführen. Auf die Eingabe 1 folgt ein Digital-Analogwandler 2, der durch einen Taktgenerator 3 gesteuert wird. Bei diesem Digital-Analogwandler ist es ganz wesentlich, dass eine verhältnismässig feine Quantisierung vorgenommen wird. Wegen der Trägheit des menschlichen Auges ist eine Quantisierung von mindestens 32 Quantisierungsstufen zweckmässig. Es besteht jedoch gar kein Hinderungsgrund, bis zu 256 Quantisierungsstufen vorzusehen, die, falls man ebenso viele Grauwerte annehmen sollte, zu einer für das menschliche Auge nicht mehr erkennbaren Grauwertabstufung führen würden. Diesem Analog-Digitalwandler ist ein Prozessor, beispielsweise eine Mikroprozessor 4 nachgeschaltet, der ebenfalls durch den Taktgenerator 3 taktmässig angesteuert wird. Dieser Prozessor steuert dann das Wiedergabegerät, im vorliegenden Fall einen Elektroerosionsdrucker. Jedem so eingegebenen Grauwert ist dann in einem Mikrocode 5 ein Grauwert zugeordnet. Wahlweise kann mit dem Mikrocode ein für den Kunden oder Benutzer eingerichtetes Steuergerät 6 vorgesehen sein, mit dem der Benutzer Veränderungen der im Mikrocode 5 eingespeicherten Grauwertskala anbringen kann. Der Mikrocode 5 steuert dann nach einem sogenannten Table-look-up-Verfahren einen Speicher 8 an, in dem verschiedene Bildpunktmuster für die verschiedenen Grauwerte abgespeichert sind. In gleicher Weise wird ein Speicher 9 für die zugeordneten Strom- und Speicherwerte angesteuert, da ja die verschiedenen Durchmesser oder Grössen der Bildpunkte eines Bildelementes durch entsprechende Änderung von Strömen oder Spannungswerten erzielt werden können. Für die Auswahl aus den im Speicher 8 abgespeicherten Bildpunktmuster ist ein Zufallsgenerator 7 vorgesehen, der ebenfalls durch den Taktgenerator 3 angesteuert wird. Die beiden Speicher 8 und 9 steuern dann die Treiberstufen 10 an, die dann das Druckverfahren bewirken. Im hier angenommenen Fall sollen also die Treiberstufen die entsprechenden Ströme den für den Druck der Bildelemente erforderlichen Elektroden zuführen, so dass bei 11 das Druckverfahren durchgeführt werden kann. Durch das neue Verfahren erhält man also Grauwerte zwischen z.B. 1,6% und 100% Schwärzung und eine beliebig fein verteilte Grauskala. Von besonderem Wert ist es dabei, dass man bei der Quantisierung der einkommenden Analogsignale eine Kompression der Amplitudenhöchstwerte durchführen kann. In gleicher Weise ist es möglich, die Quantisierung nach einer logarithmischen Skala durchzuführen. Weiterhin ist es möglich, mit dem neuen Verfahren ein an sich grobkörniges Bild so weitgehend zu verbessern, dass die Körnigkeit nicht mehr erkennbar ist. Insbesondere dürfte es mit diesem neuen Verfahren erstmals möglich sein, eine Bildwiedergabe zu erzielen, die einer mit einem hochwertigen Objektiv auf einem sehr feinkörnigen Film aufgenommenen Photographie entspricht, die auf ebenso feinkörnigem Papier wiedergegeben wird. Insbesondere ist denkbar, dass mit diesem neuen Verfahren unter Verwendung von Druckverfahren für Transparentfolien Abbildungen mit photographischer Qualität möglich ist.

Zusammenfassend kann gesagt werden, dass die bildliche Wiedergabe eines bestimmten Grauwertes in einem Bereich mit Hilfe von Bildpunkten folgender Struktur unterliegt: Der Bereich ist matrixartig in Bildelemente aufgegliedert, die für sich wiederum einer matrixartigen Aufgliederung aus vorhandenen und nichtvorhandenen Bildpunkten unterliegen.

Zur Erzeugung eines bestimmten Grauwertes wird ein Vorrat unterschiedlicher Bildpunktstrukturen für obengenannten Bereich angegeben mit unterschiedlich grossen Clusterbildungen. Da grosse Cluster nur eine geringe Auflösung zulassen und kleine Cluster Störbeeinflussungen (gerätespezifischer und optischer Art) ausgesetzt sind, wird aus dem Vorrat eine solche Bildpunktstruktur herausgesucht, die ein Höchstmass an Auflösung zulässt, bei der noch keine Störbeeinflussung auftritt.

## Patentansprüche

1. Rechnergesteuertes Verfahren zur Wiedergabe von bildlichen Darstellungen mit Grauwerten unter Verwendung von Bildpunkten unterschiedlicher Verteilungsgrösse und Anordnung innerhalb eines einen Grauwert repräsentierenden Bereiches, dadurch gekennzeichnet, dass für einen bestimmten Grauwert ein Vorrat unterschiedlicher Bildpunktstrukturen für einen Bereich vorgegeben und gespeichert wird mit unterschiedlich grossen Anhäufungen (Clustern) beieinanderliegender Bildpunkte, und dass aus diesem Vorrat jene Bildpunktstruktur zur Grautondarstellung programmgesteuert ausgewählt wird, die zwischen einer Struktur mit grossen Anhäufungen, welche zu einer bildlichen Darstellung mit geringer Auflösung führen würde, und einer Struktur mit kleinen Anhäufungen, welche zu einer bildlichen Darstellung mit grosser Auflösung führen würde, die gegenüber bildpunkterzeugungsgerätespezifischen und optischen die bildliche Darstellung beeinflussenden Störeffekten anfällig ist, liegt und wobei die programmgesteuerte Auswahl auf iterativem Wege über eine programmgesteuerte Ermittlung der Störeffekte oder durch Zuordnung einer die einem bestimmten Störeffekt zugeordneten bildpunkterzeugungsgerätespezifischen Bildpunktstruktur erfolgt.

2. Verfahren nach Anspruch 1, dadurch gekennzeichnet, dass die Bereiche matrixförmig in Teilbereiche aufgegliedert sind, die wiederum einer matrixartigen Aufgliederung für vorhandene und nichtvorhandene Bildpunkte unterliegen.

3. Verfahren nach einem der Ansprüche 1 oder 2, dadurch gekennzeichnet, dass die Grauwerte der Teilbereiche dem Grauwert des Gesamtbereiches entsprechen.

4. Verfahren nach einem der Ansprüche 1 oder 2, dadurch gekennzeichnet, dass in Teilbereichen mit gleichen Grauwerten die Bildpunkte unterschiedlich angeordnet sind.

## Revendications

1. Procédé commandé par calculateur pour reproduire des représentations sous forme d'image à valeurs de gris en utilisant des points d'image de degré de dispersion et disposition variables à l'intérieur d'une zone représentant une valeur de gris, caractérisé en ce que, pour une valeur de gris déterminée, on prédétermine et l'on mémorise une réserve de structures de points d'image différentes pour une zone, avec des groupements (clusters) d'importance variable de points d'image contigus, et en ce qu'on sélectionne dans cette réserve sous la dépendance d'un programme la structure de points d'image pour la représentation de nuance de gris qui est comprise entre une structure à groupements importants qui entraînerait une représentation sous forme d'image à faible résolution et une structure à groupements réduits qui entraînerait une représentation sous forme d'image à forte résolution, qui est sensible aux effets perturbateurs spécifiques du générateur de points d'image et optiques qui influencent la représentation sous forme d'image, la sélection commandée par programme étant effectuée par voie itérative par l'intermédiaire d'une détermination, commandée par programme, des effets perturbateurs ou par affectation d'une structure de points d'image spécifique du générateur de points d'image correspondant à un effet perturbateur déterminé.

2. Procédé selon la revendication 1, caractérisé en ce que les zones sont subdivisées sous forme matricielle en zones partielles qui sont soumises elles-même à une subdivision sous forme matricielle pour les points d'image présents et non-présents.

3. Procédé selon la revendication 1 ou la revendication 2, caractérisé en ce que les valeurs de gris des zones partielles correspondent à la valeur de gris de la zone totale.

4. Procédé selon la revendication 1 ou la revendication 2, caractérisé en ce que les points d'image sont disposés différemment dans des zones partielles de mêmes valeurs de gris.

## Claims

1. Computer-controlled method for reproducing images with grey values, using picture elements (pels) of different distribution, size and arrangement within an area representing a grey value, characterized in that a stock of different pel structures comprising clusters of different sizes of adjacent pels is predetermined and stored for a particular grey value, and that from said stock that pel structure is selected under program control for grey value representation which lies between a structure with large clusters, yielding a low-resolution image, and a structures with small clusters, yielding a high-resolution image susceptible to pel generator specific and optical disturbances adversely affecting the image, and wherein program-controlled selection is iteratively effected by program-controlled detection of said disturbances or by associating a pel generator specific pel structure connected with a particular disturbance.

2. Method according to claim 1, characterized in that the areas are subdivided in matrix fashion into partial areas with in turn are subdivided in matrix fashion into existing and non-existing pels.

3. Method according to any one of the claims 1 or 2, characterized in that the grey values of the partial areas correspond to the grey value of the total area.

4. Method according to any one of the claims 1 or 2, characterized in that in partial areas of the same grey value the pels are differently arranged.

FIG. 1A

FIG. 1B

FIG. 2A

FIG. 2B

FIG. 2C

FIG. 3

SCHWÄRZE

100 %

80

60

40

20

ANZAHL DER PEL'S/
16 - FELD

2   4   6   8   10   12   14   16

SCHWÄRZE

100 %

80

60

40

20

FIG.4A

2  4  6  8  10  12  14  16  PEL

FIG.4

SCHWÄRZE

100 %

80

60

40

20

FIG.5A  FIG.5B

FIG.5

ANZAHL DER PEL'S /
16-FELD

2  4  6  8  10  12  14  16

FIG. 6 A

FIG. 6 B

FIG. 6 C

FIG. 6 D

FIG. 6 E

FIG. 7 A

FIG. 7 B

FIG.8

13

FIG. 9